# EUROPEAN PATENT SPECIFICATION

(11) **EP 0 829 102 B1**
(45) Date of publication and mention of the grant of the patent: **29.01.2003**
(21) Application number: 96919962.9
(22) Date of filing: 03.06.1996
(51) Int. Cl.: H01M 6/06, H01M 6/50

(54) **SEPARATORS FOR ELECTROCHEMICAL CELLS**
SEPARATOR FÜR ELEKTROCHEMISCHE ZELLEN
SEPARATEURS POUR PILES A ENERGIE ELECTROCHIMIQUE

(30) Priority: 02.06.1995 GB 9511205
(43) Date of publication of application: 18.03.1998
(73) Proprietor: Ever Ready Limited, Southgate London N14 5AQ (GB)
(72) Inventor: RANDELL, Christopher Fred, Durham DH1 5SP (GB); WHITE, Neal Charles, Northumberland NE46 3AT (GB)
(74) Representative: Lord, Hilton David
(86) International application number: PCT/GB96/01318
(87) International publication number: WO 96/038869

(56) References cited:
- DE-A- 2 019 485
- US-A- 3 930 887
- DATABASE WPI Section Ch, Week 7920 Derwent Publications Ltd., London, GB; Class A85, AN 79-38135B XP002012696 & JP,A,54 045 750 (HITACHI MAXELL) , 11 April 1979
- DATABASE WPI Section Ch, Week 7835 Derwent Publications Ltd., London, GB; Class A85, AN 78-62448A XP002012697 & JP,A,53 084 129 (MATSUSHITA ELEC IND KK) , 25 July 1978
- DATABASE WPI Section EI, Week 9516 Derwent Publications Ltd., London, GB; Class X16, AN 95-119917 XP002018983 & JP,A,07 045 287 (FUJI ELECTROCHEMICAL CO LTD) , 14 February 1995

## Description

The present invention relates to separators for electrochemical cells which help to eliminate or reduce undesirable effects which can arise during storage and use of such cells.

The history of electrochemical cells goes back to 1866 when Leclanché first discovered the principle on which they are based. The manufacture and design of electrochemical cells has come a long way since that time, but problems still remain. Cells (also known as batteries, although the term technically relates to a series of cells) essentially consist of an anode, a cathode and an electrolyte. In the present day version of the Leclanché cell, the anode is zinc, the cathode is manganese dioxide and the electrolyte is an aqueous solution of varying proportions of zinc chloride and ammonium chloride. In other primary cells, the electrolyte is frequently an aqueous solution of potassium or sodium hydroxide. In any event, it is necessary to seal the various components into a can in order to prevent the possibly dangerous escape of the constituents, as well as to prevent the atmosphere from affecting the constituents.

The problem of leakage of the electrolyte and corrosion of the can (zinc in Leclanché cells) was very largely overcome by the addition of cadmium and mercury, but especially mercury, to the cell ingredients.

Thus, mercury was responsible for reducing perforation of the can during abuse conditions, reducing corrosion and preventing perforation during storage, and it also had the advantage that it assisted in discharge. However, now that mercury is viewed as a major environmental pollutant, there has been a very major push to develop cells with no added mercury and, to a lesser extent, cells with no added cadmium.

The essential problem with cells which have no added mercury is that no one has yet found any additive which is capable of recreating the advantages of cells which contain mercury. In fact, even the optimum selection of all of the currently known additives is not as good as mercury.

One factor for assessing the performance of cells is performance retention. This is measured by initially storing cells at high temperatures for long periods (for example, 13 weeks at 45°C and 50% r.h. [relative humidity]) and then calculating performance retention as a measure of performance compared with similar batteries kept for two weeks at 20°C. The results are ideally in excess of 80%. Known additives generally have a performance retention in the region of only 75% by comparison with cells containing no additives, which typically have a performance retention in the region of 82%.

Apart from the necessary anode, cathode and electrolyte, practical considerations demand that a separator is provided between the anode and the cathode in order to avoid possible contact between the anode and cathode, which could lead to undesirable short circuiting.

In general, one of two types of separator is employed, and is either a gel/paste composition or coated paper. With the drive to greater efficiency and performance, the coated paper separators are particularly preferred, as they take up less space in the cell.

The coated paper separators are coated with starch which, in the presence of the electrolyte, is ionically conductive, but not electronically conductive.

We have now, surprisingly, discovered that the nature of the starch used to coat the separator can have a very significant effect on the problems encountered using cells which have no added mercury.

Thus, in a first aspect, the present invention provides a coated paper separator for electrochemical cells, according to claim 1. The invention also provides coating preparations suitable for the preparation of such separators according to claim 17, uses according to claims 15 and 16 and an electrochemical cell according to claim 18.

An advantage of the invention is that the separators generally remain substantially stable with time.

It is well known in the starch industry that different starches have different properties, and that different starches react differently in the presence of water. Essentially, without being bound by theory, it is believed that water hydrates the starch molecule, causing the molecule to unwind from its normal tertiary configuration, so that the viscosity of the solution increases. The greater the crosslinking in a starch molecule, the less the molecule is able to hydrate and gel.

Crosslinked starch molecules are a necessary part of the coating, as is a gum (or gelling agent). It is not certain precisely what functions these components perform, but we believe that the crosslinked starch molecules provide a lattice in which the gelled electrolyte is located, the gum or gelling agent also being required to provide the necessary consistency of the coating, as well as to provide adhesion to the zinc can.

Accordingly, many crosslinked, but not necessarily highly crosslinked, starches are used as the primary material of the coating, and many gums and other gelling agents are used as the secondary material (primary and secondary are used herein only for purposes of convenience, and have no other significance).

All of the combinations of materials used in the art are approximately as good as any other when subject to the tests employed by the art. That is to say, the prior art combinations of materials all provide the necessary ionic conductance and electronic barriers, without any overt impairment of fresh performance of the cell when assembled.

However, what has not previously been recognised in the art is that some of the materials are unstable in the presence of an aqueous zinc chloride solution which is, for example, a major drawback in the field of carbon-zinc cell technology.

For the first time in the industry, we have performed sedimentation tests, and the results have been striking. In these tests, the starch is added to an aqueous solution of zinc chloride, typically 25 or 46%, and the sample is stored at 45°C with monitoring over time. Although the time is not crucial, the test is often performed over a period of weeks, a period of around 13 weeks generally providing indicative results. The results are surprising. We find that some starches discolour or blacken with time, indicating a breakdown of the starch, whilst other starches gel initially, for example, but have a continuous increase in sediment volume with time, indicative of an undesirable lack of stability. The best starches neither discolour nor produce any change in sediment volume.

In addition, we have developed two tests which we have termed the High Drain Continuous Test (HDCT) and the Low Drain Continuous Test (LDCT). The High Drain Continuous Test is intended to simulate abuse conditions, such as might be found in leaving a flashlight in the "on" condition over a period of time, even after the battery had, to the user, gone "flat". The Low Drain Continuous Test simulates the conditions experienced by a battery in, for example, a clock. HDCT results are measured in terms of the amount of leakage, whilst LDCT results are measured in terms of failure of the battery due to perforation or splitting of the can. These tests produce highly informative results in considerably less time than would otherwise be experienced in the conditions being simulated. Results are generally available in around 4 and 10 weeks respectively, although it will be appreciated that the amount of time required will depend on such factors as the cell which is to be tested and the extent to which it is desired to test the cell, for example.

These tests (details of which are provided below) have enabled us to quickly and easily assay the effects of various constituents used in cell construction. In particular, we have assayed the various starches used in the industry and, in conjunction with the sedimentation test described above, we have established that a combination of highly crosslinked starches and etherified celluloses together provide an extremely superior form of separator coating which is generally more stable and helps to prevent splitting and leakage, compared with the separators of the art.

The term "highly crosslinked" is well known in the starch industry and, with respect to batteries, the preferred starches are corn, wheat and potato starches, and we have established that cells constructed with separators comprising highly crosslinked corn starch are surprisingly better in both the low drain and the high drain continuous tests. In the sedimentation tests, there is very little to choose between corn, wheat and potato starches.

Suitable examples of highly crosslinked corn starch include: Vulca 90 and Vulca 84 (Trademarks of National), Celex (Trademark of Nippon Starch Refining Company Limited) and the starches produced by Roquette, such as Lab 2211. Suitable examples of highly crosslinked potato starch include Vector R140 and Vector R120 (Trademarks of Roquette). A suitable example of a wheat starch is Lab 2214 (Roquette).

While we prefer that the starch used in the coating is only a highly crosslinked starch, such as described above, it is also possible that other starches may be used in the coating. In such an instance, it is preferable to keep the proportion of highly crosslinked starch as high as possible, preferably substantially over 50% of the dry weight of the coating mix, more preferably over 80% and ideally over 90%.

The various soluble starch gellants and natural gums used to manufacture separators all appear to decompose during storage. However, the etherified celluloses appear to be stable in the sedimentation test, and suitable examples for use in the present invention include: Tylose MH200K (Trademark of Hoechst), Tylose MH50, Culminal MHPC100 (Trademark of Aqualon) and Courtaulds DP 1209.

Etherified celluloses may be any that are suitable, by which is meant that the compound should swell and gel substantially immediately and remain stable in the presence of water, at least during the duration of the sedimentation tests described above.

Suitable examples of etherified celluloses include methyl cellulose, ethyl cellulose, hydroxymethyl cellulose, carboxymethyl cellulose (including salts, such as the sodium salt), hydroxyethyl cellulose, ethylhydroxyethyl cellulose, methylhydroxyethyl cellulose, 2-hydroxypropyl cellulose, methylhydroxypropyl cellulose and 2-hydroxypropylmethyl cellulose.

We have also established that viscosity is an important factor. If the separator mix is outside certain viscosity limits, typically in the region of 3000 to 70000 cP (3 to 70 Pa.s), undesirable results and poor cells are usually obtained. Below 3000 cP (3 Pa.s), the mix is often so liquid that it soaks straight into the paper, which can lead to the tearing of the paper, for example. Above 70000 cP (70 Pa.s), the mix is generally too thick to spread on the paper satisfactorily.

Accordingly, it is desirable to provide a mix which falls within the limits defined above, and this is generally possible by using an etherified cellulose having a viscosity of between about 20 cP (0.02 Pa.s) and about 300 cP (0.3 Pa.s). As used herein (unless otherwise specified) the viscosity of a substance is defined in terms of a 2% w/v aqueous solution of that substance at 20°C at a neutral pH. Ideally the viscosity is between 50 and 100 cP (0.05 and 0.1 Pa.s).

The following etherified celluloses are useful in the present invention and fall into the above category. The number following the name of each gellant is indicative of the viscosity in centipoise of that gellant, as expected by the manufacturer. For example, Hoechst Tylose H 20 has an expected viscosity of 20 cP. The gellants are as follows:
Hvdroxyethylcellulose
   Hoechst Tylose H 20
   Hoechst Tylose H 300
Methylhydroxyethylcellulose
   Hoechst Tylose MH 50
   Hoechst Tylose MH 200
   Hoechst Tylose MH 200K
   Hoechst Tylose MH 300
   Berol Modocoll E 20
   Berol Modocoll E 100
Na Carboxymethylcellulose
   Hoechst Tylose C 30
   Hoechst Tylose C 300
Methylhydroxypropylcellulose
   Aqualon Culminal MHPC50
   Aqualon Culminal MHPC100
   Dow Methocel K4M (200)
   Courtaulds HPM 100 DS
   Courtaulds DP 1208 (100)
   Courtaulds DP 1209 (50)
Methylcellulose
   Aqualon Culminal MC25 S
   Aqualon Culminal MC40
   Aqualon Culminal MC60 S
   Dow Methocel A4M (200)
   Courtaulds MM20P

Particularly preferred combinations for use in preparing the coatings of the present invention comprise or consist of Vulca 90 with Tylose MH200K, Tylose MH50 or Courtaulds DP 1209.

The proportion of highly crosslinked starch to gelling agent (the terms gelling agent and etherified cellulose are used interchangeably herein) may be any that is suitable and recognised in the industry, and the generally preferred range is from 1 : 1 to 100 : 1 by weight, more preferably from about 20 : 1 to 5 : 1, with a ratio of about 10.5 : 1 of starch to gellant being particularly preferred. The coating of the separator comprises the mix of starch and gellant together with water, generally in excess of 50% in order to provide an easily applied coating. The amount of water is not critical, as the coating is applied to the paper separator and then dried before insertion into the can. However, it will be appreciated that the liquid coating generally should not be too thin or too thick to prevent convenient application to the paper (see the above discussion of viscosity).

A suitable method of application of the coating is to have the paper run between 2 rollers and to allow a thin layer of the separator mix to be attached to the paper. The amount of separator mix on the paper can be controlled by the gap between the rollers.

Drying may be by any suitable means, such as infrared, passage over a steam drum, hot: air or oven drying.

The nature of the paper to be used is not critical to the present invention, and may be any that is known in the art for use as a separator. Suitable simplex papers include Enso 80 (Trademark of Enso), Amatfors 57 and Sibille Dalle 64, while suitable duplex papers include PBDE 100 and PBDE 70 (NKK).

We have also found that it is advantageous to employ a polyoxyalkylene nitrogen containing compound as an additive when the cell has an acidic electrolyte, as this can further help to reduce gassing and leakage.

We have found that polyoxyalkylene nitrogen containing compounds generally perform as well as, or better than, any single other additive intended to prevent gassing, leakage or corrosion. In addition, we have also found that performance is often enhanced.

The most useful such additives seem to be polyoxyethylene nitrogen containing compounds, especially the polyoxyethylene amines. A particularly preferred additive is Crodamet C20, which is a monoamine having two polyoxyethylene side chains, the number of oxyethylene units being 20 moles per mole of Crodamet C20.

Suitable formulae for the additives are as shown below: 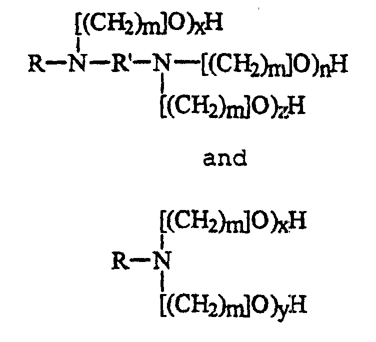 [wherein R represents an optionally substituted alkyl group having from 1 to 30 carbon atoms, R' represents an alkyl group having from 2 to 10 carbon atoms, each m is the same or different and represents an integer from 1 to 4 inclusive, and n, x, y, and z are the same or different, and each represents an integer between 1 and 30]. More preferred are compounds having the following formulae:

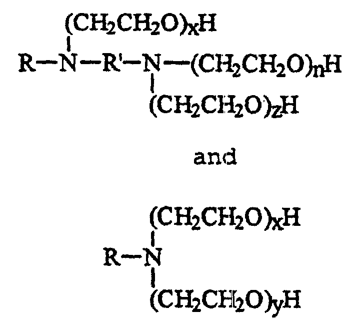

Particularly preferred compounds are those wherein R has an average of around 10 carbon atoms, R' has 3 or 4 carbon atoms, each m is 2 and n, x, y and z each averages about 10. The optional substituents are as noted above, but there are preferably no substituents.

The additives may be added at any stage during the preparation of the electrochemical cell. There is no particularly preferred method of addition to the cells of the invention, provided that the additives are able to dissolve in the electrolyte.

The additives can be added to the cell by coating a dilute aqueous solution of the additive on the inside of the can. The solvent is then allowed to dry out leaving a coated can. However, this method is not generally industrially practicable.

The cells with which the additives can be used typically have a cathode made of manganese dioxide and acetylene black, the manganese dioxide being in finely divided form and mixed with acetylene black before mixing with the electrolyte, as is well known in the art. Thus, it is convenient to incorporate the additive with the dry components of the cathode, or to introduce it together with the electrolyte. Preferred quantities of additive are typically in a proportion of about 0.01 to 2% w/w (additive/mix), preferably about 0.04 to 1%, and most preferably 0.1%.

We prefer to introduce the additive into the separator coating. To do this, it is generally necessary to add the additive and the gellant to the water before adding starch in order to provide the least complications with regard to uneven distribution. The coating can then be applied to the paper as described above, and the resulting separator is then ready for use in an electrochemical cell. A suitable amount of the additive of the present invention to incorporate into an electrochemical cell will be readily apparent to a man skilled in the art. However, a suitable amount to add to the separator, for example, is, with respect to the dry coating weight of the coating, from 0.1 to 10%, more preferably from 0.5 to 5% and especially about 1.5%. It will be appreciated that this method is preferable to incorporation of the additive into the cathode mix, as it uses less additive.

Typical cells in which the sepaarators of the present invention can be used include primary and secondary zinc carbon cells, including those cells known as Leclanché and zinc chloride cells. The electrolyte in such cells is typically as follows: Leclanché electrolyte - 5-20% zinc chloride, 30-40% ammonium chloride, remainder water; zinc chloride electrolyte - 15-35% zinc chloride, 0-10% ammonium chloride, the remainder water. Some other suitable cells for use in the present invention are described in Chapter 5 of the Handbook of Batteries and Fuel Cells (edited by David Linden, published by McGraw Hill).

The cells in which the separators of the present invention can be used may also be of any suitable configuration, such as round, square or flat. Thus, in addition to the aspects described above, the present invention also provides a cell comprising a separator of the invention, optionally together with a compound as described above when the cell contains an acidic electrolyte.

The present invention further provides a sedimentation test as described above, but it will be understood that the concentration of zinc chloride may be adjusted as appropriate, and that any constituent of the separator coating may be tested, as desired.

In the Low Drain Continuous Test, the can is sealed but left uncovered, a high resistance is secured between the poles of the cell so as to complete a circuit, and the cell is monitored as to its condition.

It will be understood that, in this test, monitoring the cell is intended to ascertain whether the cell fails during testing. The typical lifetime of a D-size zinc carbon cell is up to about 10 weeks when the resistance is about 300 Ω. Other resistances may be used as appropriate, although 300 Ω provides useful results. An appropriate resistance for a C-size cell is about 500 Ω while, for an AA-size cell it is about 810 Ω. The omission of the bottom cover and the over tube is to expose the can to a surrounding atmosphere, thereby enhancing any failure that might occur, which is one reason why this test can be performed in 10 weeks, when it might take 2 years in a clock, for example.

In the High Drain Continuous Test, the cell is preferably fitted with a bottom cover, a low resistance is secured between the top cover and a point on the can wall proximal to the top cover and, thereafter, an overtube is slid onto the can so as to cover substantially as much of the can as possible without dislodging the resistance, the resulting assembly is weighed, the cell is stored at ambient temperature, preferably 20° C, the cell is weighed at intervals during storage if desired, and the amount of electrolyte lost during storage is determined by weighing to establish leakage. This last weighing may be effected by removing and weighing the over tube after storage or weighing the cell without the over tube but with the resistance, or both. Addition of the bottom cover during this test is particularly advantageous in preventing corrosion at the bottom of the can during the test.

A suitable resistance for this test for a D-size cell is 3.9 Ω and about 5 Ω for an AA-size cell, and the test is typically carried out for 4 weeks, testing at weekly intervals. The normal discharge life for a D cell is about 6 hours in this test until the cell becomes useless. Testing for 4 weeks, for example, establishes how the cell stands up to abuse conditions.

The present invention will now be illustrated with respect to the accompanying Examples wherein percentages are by weight, unless otherwise specified. The Test Examples are followed by certain Test Protocols appropriate to the Test Examples or which are not known in the art. Unless otherwise stated, the zinc cans used in the present examples typically comprise 0.4% lead and 0.03% manganese and have a wall thickness of 0.46 ± 0.03mm. The mix for the cathode typically comprises 52% manganese dioxide, 0.4% zinc oxide, 6% acetylene black and 41.6% zinc chloride solution (26.5% zinc chloride w/v). Otherwise, cells are generally manufactured in accordance with EP-A-303737.

### EXAMPLE 1

### SEDIMENTATION TEST

The test was performed by mixing 1 g of test material with 100 ml of 26% or 46.5% zinc chloride solution and allowing the mixture to stand in a closed measuring cylinder at 45°C. The mixture was observed over 13 weeks, and the results are shown in Table 1 below. The results show the % swelling of the test material at 2, 6 and 13 weeks (2w, 6w and 13w).

**Table 1**

| | **26% ZnCl**_{**2**} | | | | **46.5% ZnCl**_{**2**} | | | |
|---|---|---|---|---|---|---|---|---|
| | Initial | 2w | 6w | 13w | Initial | 2w | 6w | 13w |
| **Stable Class 1 Highly Cross Linked Corn Starch** | | | | | | | | |
| National Vulca 90 | 5% | 5% | 6% | 6% | 5% | 5% | 7% | 7% |
| Nippon Starch Refining Celex | 4% | 6% | 7% | 7% | 5% | 19% | 20% | 24% |
| Roquette | 2% | 2% | 2% | 2% | 5% | 7% | 7% | 7% |

| **Stable Class 1 Highly Cross Linked Potato Starch** | | | | | | | | |
|---|---|---|---|---|---|---|---|---|
| Roquette Vector R140 | 5% | 5% | 7% | 7% | 5% | 5% | 7% | 7% |
| Roquette Vector R120 | 5% | 6% | 14% | 14% | 6% | 7% | 14% | 14% |

| **Unstable Class 2 Highly Cross Linked Corn Starch** | | | | | | | | |
|---|---|---|---|---|---|---|---|---|
| Nippon Starch Refining Rongum CE3 | 15% | 25% | 28% | 29% | 22% | 38% | 42% | 46% |
| National Cleargel | 10% | 15% | 18% | 18% | 24% | 40% | 80% | 26% |

| **Stable Class 3 PVP Adhesive** | | | | | | | | |
|---|---|---|---|---|---|---|---|---|
| ISP PVP K120 | 100% | 10% | 100% | 100% | 100% | 100% | 100% | 100% |

| **Stable Class 3 Methyl Cellulose Ether Gellant** | | | | | | | | |
|---|---|---|---|---|---|---|---|---|
| Hoechst Tylose MH200K | 100% | 100% | 100% | 100% | 100% | 100% | 100% | 100% |
| Hoechst Tylose MH50 | 100% | 100% | 100% | 100% | 100% | 100% | 100% | 100% |
| Aqualon Culminal MHPC100 | 100% | 100% | 100% | 100% | 100% | 100% | 100% | 100% |
| Courtaulds 1209 | 100% | 100% | 100% | 100% | 100% | 100% | 100% | 100% |

| **Unstable Class 3 Natural Gum (decomposes during storage)** | | | | | | | | |
|---|---|---|---|---|---|---|---|---|
| Nippon Starch Refining Kiprogum | 100% | 100% | 100% | 100% | 100% | 100% | 100% | 100% |

| **Unstable Class 3 Soluble Starch Gellant (decomposes during storage)** | | | | | | | | |
|---|---|---|---|---|---|---|---|---|
| National Instant Pureflo | 40% | 86% | 100% | 100% | 100% | 100% | 100% | 100% |

### Key

Class 1: Little or no swelling and small changes with time
Class 2: Some initial gelling and increasing sediment with time
Class 3: Rapid and complete gelling.
Stable: no colour change
Unstable: colour changed with time

### Results

### Stable Class 1 Highly Cross Linked Corn Starch

Vulca 90
Celex
Roquette 2211

### Stable Class 1 Highly Cross Linked Potato Starch

Roquette (Vector R120 or R140)

### Unstable Class 2 Corn Starch

Rongum CE3
Cleargel

### Stable Class 3 Gellants

Methyl Cellulose Ethers :-
Tylose MH200K
Tylose MH50
Culminal MHPC100
Courtaulds 1209
Polyvinylpyrrolidone

### Unstable Class 3 Gellants

Instant Pureflo
Kiprogum

### EXAMPLE 2

### Testing Combinations of Starch and Gallant in Low Density and High Density Continuous Tests

Separators were made up as described in the Test Protocols and were tested on both the LDCT and HDCT tests for 4 weeks (4w) and 7 weeks (7w) respectively. In Table 2, an X indicates the absence of a substance, while the figure associated with each individual ingredient is the % by weight of that ingredient in the dry coating preparation.

**Table 2**

| Separator coating contains components as indicated below. | | | | | | | |
|---|---|---|---|---|---|---|---|
| **Stable** Class 1 Highly Cross Linked Corn | **Stable** Class 3 Methyl Cellulose Ether | **Stable** Class 1 Highly Cross Linked Potato | *Unstable* Class 2 Moderate Cross Linked Corn | *Unstable* Class 3 Gum | *Unstable* Class 3 Soluble Starch | **4w HDCT** | **7w LDCT** |
| **Vulca 90 91.3%** | **Tylose MH200K 8.7%** | X | X | X | X | 1.6g | 21% |
| **Vulca 90 95.0%** | X | X | X | **Kiprogum 5.0%** | X | 1.5g | 40% |
| X | **Tylose MH200K 8.7%** | **Vector R120 91.3%** | X | X | X | 1.9g | 80% |
| **Vulca 90 45.7%** | **Tylose MH200K 8.7%** | X | **Rongum CE3 45.6%** | X | X | 1.6g | 100% |
| X | **Tylose MH200K 8.7%** | X | **Rongum CE3 91.3%** | X | X | 1.5g | 100% |
| **Vulca 90 75.1%** | X | X | **Cleargel 18.8%** | X | **Instant Pureflo 6.1%** | 2.0g | 90% |
| X | X | **Vector R120 75.1%** | **Cleargel 18.8%** | X | **Instant Pureflo 6.1%** | 2.2g | 100% |

From the above Table, it can be seen that it is necessary to provide a highly crosslinked starch as a major component in the dry coating preparation. If starches are used in the coating preparation which are not highly crosslinked, then these should comprise substantially less than 50% of the dry coating preparation.

### EXAMPLE 3

### Comparison of Different Separators

Separators were made as described, and the results of various tests are shown below in Table 3. The separators (designated as Sep. 1 - 5) were made from:-

| | | |
|---|---|---|
| Sep. 1. | Stable Class 1 Highly cross-linked corn starch | Vulca 90 |
| | Unstable Class 2 corn starch | Cleargel |
| | Unstable Class 3 soluble starch | Instant Pureflo |
| | Arylsulphonate | Na Toluenesulphonate |
| | | |
| Sep. 2. | Stable Class 1 Highly cross-linked potato starch | Vector R120 |
| | Stable Class 3 Methyl Cellulose Ether gellantTylose | MH200K |
| | Fluoropolyoxyethylene Ether | Forafac 1110D |
| | | |
| Sep. 3 | Stable Class 1 Highly cross-linked corn starch | Celex |
| | Unstable Class 2 corn starch | Rongum CE3 |
| | Unstable Class 3 gum gellant | Kiprogum |
| | Additive free | |
| | | |
| Sep. 4. | Stable Class 1 Highly cross-linked corn starch | Vulca 90 |
| | Stable Class 3 Methyl Cellulose Ether gellantTylose | MH200K |
| | Trimethyl Alkyl Ammonium | Cetrimide |
| | | |
| Sep. 5. | Stable Class 1 Highly cross-linked corn starch | Vulca 90 |
| | Stable Class 3 Methyl Cellulose Ether gellantTylose | MH200K |
| | Coconut Polyoxyethylene Amine | Crodamet C20 |

**TABLE 3**

| | **HDCT** | **LDCT** | **Gassing** | **Fresh Perf.** | **Fresh SCA** | **Performance after 13w/45°C/50% r.h.** |
|---|---|---|---|---|---|---|
| **Sep. 1** | 1.9g | 60% | 231% | 100% | 6.2A | 100% |
| **Sep. 2** | 2.6g | 78% | 100% | 103% | 6.6A | 99% |
| **Sep. 3** | 4.2g | 100% | 217% | 99% | 7.0A | 106% |
| **Sep. 4** | 1.4g | 30% | 140% | 99% | 5.7A | 93% |
| **Sep. 5** | 1.2g | 10% | 50% | 102% | 6.3A | 105% |

In the above Table, Separator 2 was taken as the standard (100%) in the gassing test, and Separator 1 was taken as the standard (100%) in the performance tests.

It can be seen that, especially in the gassing test, separators of the invention perform better and that the best separator incorporatesd a polyoxyethylene amine.

### EXAMPLE 4

### Comparison Testing of Combinations of Additives and Coating Compositions

Various additives were tested in combination with various separators coated with various starches and gellants in both the LDCT and the HDCT tests. The results are shown in Table 4.

It can clearly be seen from the results that highly cross-linked starches and methylcellulose ether are preferable as coatings in these tests, while polyoxyethylene amines are preferable to the compounds of the art. The tallow compounds preferably have polyoxyethylene side chains which are at least 10 units long, and preferably at least 40 units long, on average.

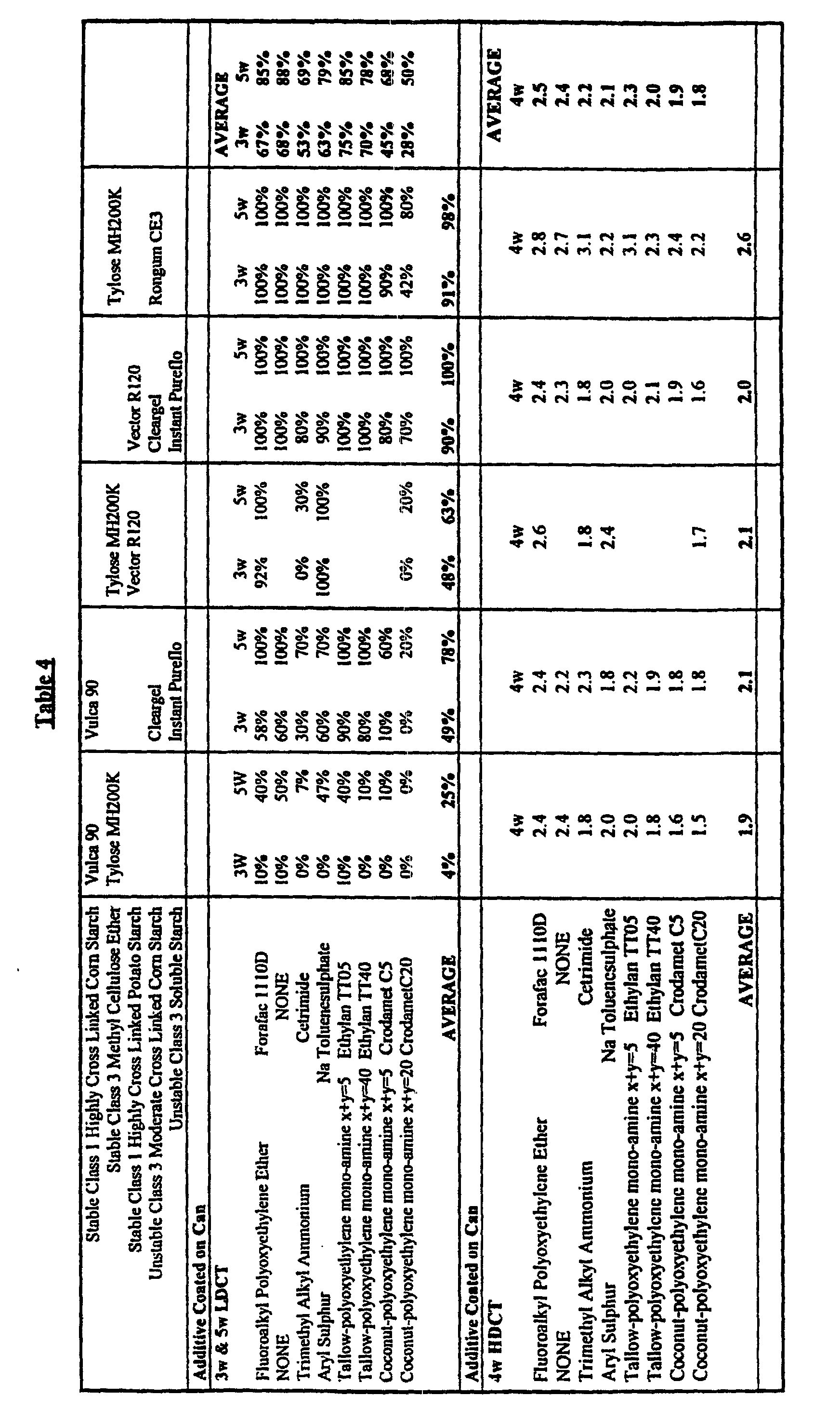

### Test Protocols

### Preparation of Separators

The first step in the preparation of a separator is to prepare the paste to be used for the coating of the paper. The formulations used in the present Examples were as follows:

| | | |
|---|---|---|
| Water | | 64.3% |
| Organic Additive | (e.g. Crodamet C20) | 0.5% |
| Gellant | (e.g. Tylose MH200K) | 3.1% |
| Starch | (e.g. Vulca 90) | 32.1% |

Three methods were commonly employed for making up the paste. These were as follows:
Paste Method 1 (Used for the separators of the Examples).
   1. Add the organic additive and gellant to water and mix, using a high shear mixer, such as a Silversen type mixer (Silversen Machine Mixer Emulsifier Model L2R, UK).
   2. Place the resulting mixture in a paddle mixer, such as a Hobart mixer, add the starch, and mix until a smooth paste is obtained.
Paste Method 2
   1. Add the gellant to the water and mix in a paddle mixer, such as a VMI mixer (Rayneri Model R6001, France).
   2. Add the starch and continue mixing.
   3. Add the organic additive and continue mixing until a smooth paste is obtained.
Paste Method 3
   1. Mix the powders together.
   2. Add the mixed, dry powders to the water and stir in a paddle mixer.
   3. Add organic additive and continue mixing until a smooth paste is formed.

The end products of these methods are virtually identical, and any method is suitable.

The separator paste is then coated onto the paper. The technique used in the above Examples is to run the coated paper between two rollers set apart by a predetermined distance in order to provide the desired coating weight when dry. The rollers are suitably set so that they run in opposite directions, with the forward roller running fastest. A suitable coating machine is made by Dixons (Dixons Pilot Coating Machine Model 160, UK).

The dry coating weight is measured in gm⁻² (gsm). Suitable gsm are 40 (for D cells), 30 (for C cells) and 20 (for AA cells).

The coated paper in the above Examples is then dried either by oven-drying at 100-140°C and/or by steam drum-drying at 100-150°C.

### HDCT (High Drain Continuous Test)

1. Cell is manufactured as above. The bottom cover is added but no overtube.
2. 3.9Ω resistors are soldered between the cover and the top of the can adjacent the cover. Cells are weighed (w₁)
3. Overtubes are weighed (w₂)
4. The overtube is pushed on cell but NOT spun in. The cell is weighed (w₃).
5. The HDCT cells are stored at 20°C for 4w. The normal discharge life for D on a 3.9Ω test is ∼6h. 4w represents an abuse test to simulate a consumer leaving equipment switched on.
6. At weekly intervals (1w, 2w, 3w & 4w) 1/4 of the original cells are removed and measurements are taken. The complete discharged cell is weighed (w₄).
7. The overtube is removed and weighed (w₅).
8. The resulting cell with soldered resistor still intact is weighed (w₆).
9. The HDCT leakage is w₆ - w₁.

### LDCT (Low Drain Continuous Test)

1. Cell is manufactured as above. For LDCT NO bottom cover is added and NO overtube.
2. 300Ω resistors are soldered between the cover and the top of the can adjacent the cover.
3. Cells are monitored at weekly intervals up to 10w. This would be the normal lifetime for a D cell on a 300Ω test. This test is a simulation of a cell being used on a long duration test such as a clock.
4. A failure is when perforation or splitting of the can is observed. This would allow O₂ into the cell causing premature failure when on a long duration test.

### SCA Test

The cell is shorted and the current passed is measured on zero (very low) impedance meter. The resulting measurement is the SCA (Short Circuit Current) of the cell.

### IEC Discharge Performance Tests

These are Industrial Standard tests which are measured on Fresh cells (1 - 2 weeks at 20°C) and Aged cells (13weeks @ 45°C and 50% r.h.).

### Gassing Test

Cells are not fitted with a sealant or closure, allowing gas generated in the cell to escape. Cells are sealed in a glass container fitted with a stopper and a glass tube. The containers are immersed in a water bath at the required temperature. The open end of the glass tube is placed in a water bath and a water-filled graduated gas tube is positioned to collect any gas from the tube. The volume of gas generated is measured over 30 days.

### Corrosion Test

A container is filled with 25% zinc chloride solution containing 0.01% of a potential inhibitor. Strips of battery zinc alloy are immersed in the solution and the container closed to exclude air. The test specimen is stored at 45°C.

Visual examination of the strip is made at 3-weekly intervals and strips are assessed by 4 criteria:
1. General attack;
2. Small pits (<0.1mm);
3. Large pits (>0.1mm);
4. Uniformity of corrosion.

Each criterion is measured on a scale of 1 (low) to 5 (high). The scores are totalled, and the overall score is the corrosion index (CI). Controls are performed using no potential inhibitors.

## Claims

1. A coated paper separator for electrochemical cells, the coating comprising starch and gelling agent, **characterised in that** the coating comprises a highly crosslinked starch and an etherified cellulose as a gelling agent, the highly crosslinked starch forming more than 50% of the dry weight of the coating.

2. A coated paper separator according to claim 1, wherein both of the starch and the gelling agent are substantially stable over time in the presence of an aqueous zinc chloride solution.

3. A coated paper separator according to claim 1 or 2, wherein the highly crosslinked starch is selected from the group consisting of corn, wheat and potato starches.

4. A coated paper separator according to claim 3, wherein the highly crosslinked starch is corn starch.

5. A coated paper separator according to claim 1 or 2, wherein the highly crosslinked starch is corn starch selected from ®Vulca 90, and ®Vulca 84.

6. A coated paper separator according to claim 1 or 2, wherein the highly crosslinked starch is potato starch selected from ®Vector R140 and ®Vector R120.

7. A coated paper separator of any preceding claim, wherein the etherified celluloses are selected from ®Tylose MH200K, ®Tylose MH50, and ®Culminal MHPC100.

8. A coated paper separator of any preceding claim, wherein a 2% w/v aqueous solution of the coating at 20°C has a viscosity of less than 3000 cP.

9. A coated paper separator of any preceding claim, wherein a 2% w/v aqueous solution of the etherified cellulose at 20°C has a viscosity of between about 20 and about 300 cP.

10. A coated paper separator of any preceding claim, wherein a 2% w/v aqueous solution of the etherified cellulose at 20°C has a viscosity of between about 50 and 100 cP.

11. A coated paper separator of any preceding claim, wherein the etherified cellulose is selected from:
Hydroxyethylcellulose
Hoechst ®Tylose H 20
Hoechst ®Tylose H 300
Methylhydroxyethylcellulose
Hoechst ®Tylose MH 50
Hoechst ®Tylose MH 200
Hoechst ®Tylose MH 200K
Hoechst ®Tylose MH 300
Na Carboxymethylcellulose
Hoechst ®Tylose C 30
Hoechst ®Tylose C 300
Methylhydroxypropylcellulose
Aqualon ®Culminal MHPC50
Aqualon ®Culminal MHPC100
Methylcellulose
Aqualon ®Culminal MC25 S
Aqualon ®Culminal MC40
Aqualon ®Culminal MC60 S

12. A coated paper separator of any preceding claim, wherein the coating comprises a combination selected from: ®Vulca 90 with ®Tylose MH200K, and ®Vulca 90 with ®Tylose MH50.

13. A coated paper separator according to any preceding claim, wherein the proportion of highly crosslinked starch to gelling agent is from about 20 : 1 to 5 : 1.

14. A coated paper separator according to claim 12, wherein the proportion of highly crosslinked starch to gelling agent is about 10.5 : 1.

15. Use of a highly crosslinked starch and an etherified cellulose in the manufacture of a coated paper separator for electrochemical cells, the highly crosslinked starch and etherified cellulose being so selected that, under conditions of storage at 45°C in the presence of a 25% aqueous solution of zinc chloride for 13 weeks,
the highly crosslinked starch exhibits no colour change and little or no swelling and small changes with time, and
the etherified cellulose exhibits no colour change.

16. Use as defined in claim 15, wherein the aqueous solution of zinc chloride is at a concentration of 46%.

17. A composition for coating a paper separator to prepare a coated paper separate as defined in any of claims 1 to 14, the composition comprising a mixture of the highly crosslinked starch and the etherified cellulose, together with in excess of 50% water, the highly crosslinked starch forming more than 50% of the dry weight of the composition.

18. An electrochemical cell comprising a separator according to any of claims 1 to 14.

19. An electrochemical cell according to claim 18, comprising a polyoxyalkylene additive.

## Patentansprüche

1. Beschichteter Papierseparator für elektrochemische Zellen, bei dem die Beschichtung Stärke und ein Geliermittel enthält, **dadurch gekennzeichnet, dass** die Beschichtung eine hoch vernetzte Stärke und eine ätherifizierte Zellulose als ein Geliermittel enthält, wobei die hoch vemetzte Stärke mehr als 50% des Trockengewichtes der Beschichtung ausmacht.

2. Beschichteter Papierseparator gemäss Anspruch 1, bei dem beides, sowohl die Stärke als auch das Geliermittel, im Wesentlichen stabil über die Zeit sind bei Anwesenheit einer wässrigen Zinkchloridlösung.

3. Beschichteter Papierseparator gemäss Anspruch 1 oder 2, bei dem die hoch vernetzte Stärke ausgewählt wird aus der Gruppe bestehend aus Korn-, Weizen- und Kartoffelstärken.

4. Beschichteter Papierseparator gemäss Anspruch 3, bei dem die hoch vernetzte Stärke Kornstärke ist.

5. Beschichteter Papierseparator gemäss Anspruch 1 oder 2, bei dem die hoch vernetzte Stärke Komstärke ist, die ausgewählt wird aus ®Vulca 90 und ®Vulca 84.

6. Beschichteter Papierseparator gemäss Anspruch 1 oder 2, bei dem die hoch vernetzte Stärke Kartoffelstärke ist, die ausgewählt wird aus ®Vector R140 und ®Vector R120.

7. Beschichteter Papierseparator gemäss irgendeinem vorangegangenen Anspruch, bei dem die ätherifizierten Zellulosen ausgewählt werden aus ®Tylose MH200K, ®Tylose MH50 und ®Culminal MHPC100.

8. Beschichteter Papierseparator gemäss irgendeinem vorangegangenen Anspruch, bei dem eine 2% Gew./Vol. wässrige Lösung der Beschichtung bei 20°C eine Viskosität von weniger als 3000 cP aufweist.

9. Beschichteter Papierseparator gemäss irgendeinem vorangegangenen Anspruch, bei dem eine 2% Gew./Vol. wässrige Lösung der ätherifizierten Zellulose bei 20°C eine Viskosität zwischen etwa 20 und 300 cP aufweist.

10. Beschichteter Papierseparator gemäss irgendeinem vorangegangenen Anspruch, bei dem eine 2% Gew./Vol. wässrige Lösung der ätherifizierten Zellulose bei 20°C eine Viskosität zwischen etwa 50 und etwa 100 cP aufweist.

11. Beschichteter Papierseparator gemäss irgendeinem vorangegangenen Anspruch, bei dem die ätherifizierte Zellulose ausgewählt wird aus:
Hydroxyethylzellulose
Hoechst ®Tylose H20
Hoechst ®Tylose H300
Methylhydroxyethylzellulose
Hoechst ®Tylose MH50
Hoechst ®Tylose MH200
Hoechst ®Tylose MH200K
Hoechst ®Tylose MH300
Na-Carboxymethylzellulose
Hoechst ®Tylose C 30
Hoechst ®Tylose C 300
Methylhydroxypropylzellulose
Aqualon ®Culminal MHPC50
Aqualon ®Culminal MHPC100
Methylzellulose
Aqualon ®Culminal MC25 S
Aqualon ®Culminal MC40
Aqualon ®Culminal MC60 S

12. Beschichteter Papierseparator gemäss irgendeinem vorangegangenen Anspruch, bei dem die Beschichtung eine Kombination enthält, die ausgewählt wird aus: ®Vulca 90 mit ®Tylose MH200K, und ®Vulca 90 mit ®Tylose MH50.

13. Beschichteter Papierseparator gemäss irgendeinem vorangegangenen Anspruch, bei dem das Verhältnis der hoch vernetzten Stärke zu dem Geliermittel in dem Bereich von etwa 20:1 bis 5:1 liegt.

14. Beschichteter Papierseparator gemäss Anspruch 13, bei dem das Verhältnis der hoch vemetzten Stärke zu dem Geliermittel bei etwa 10,5:1 liegt.

15. Verwendung einer hoch vernetzten Stärke und einer ätherifizierten Zellulose bei der Herstellung eines beschichteten Papierseparators für elektrochemische Zellen, bei der die hoch vernetzte Stärke und die ätherifizierte Zellulose so ausgewählt werden, dass unter den Bedingungen einer Lagerung bei 45°C in Anwesenheit einer 25%-igen wässrigen Zinkchloridlösung während 13 Wochen, die hoch vernetzte Stärke keine Farbveränderung und nur eine geringe oder keine Quellung und kleine Veränderung mit der Zeit zeigt, und dass die ätherifizierte Zellulose keine Farbveränderung anzeigt.

16. Verwendung, wie sie in Anspruch 15 definiert worden ist, bei der die wässrige Zinkchloridlösung bei einer Konzentration von 46% liegt.

17. Zusammensetzung für eine Beschichtung eines Papierseparators, um einen beschichteten Papierseparator herzustellen, wie er in irgendeinem der Ansprüche 1 bis 14 definiert worden ist, wobei die Zusammensetzung eine Mischung von der hoch vernetzten Stärke und von der ätherifizierten Zellulose umfasst, zusammen mit einem Überschuss von 50% Wasser, wobei die hoch vernetzte Stärke mehr als 50% des Trockengewichtes der Zusammensetzung ausmacht.

18. Elektrochemische Zelle, die einen Separator gemäss irgendeinem der Ansprüche 1 bis 14 enthält.

19. Elektrochemische Zelle gemäss Anspruch 18, die einen Zusatzstoff von Polyoxyalkylen enthält.

## Revendications

1. Séparateur à base de papier muni d'un revêtement pour pile électrochimique, le revêtement comprenant de l'amidon et un agent gélifiant, **caractérisé en ce que** le revêtement comprend un amidon très réticulé et une cellulose éthérifiée en tant qu'agent gélifiant, l'amidon très réticulé constituant plus de 50% du poids anhydre du revêtement.

2. Séparateur à base de papier muni d'un revêtement selon la revendication 1, dans lequel l'amidon et l'agent gélifiant sont tous deux sensiblement stables dans le temps en présence d'une solution aqueuse de chlorure de zinc.

3. Séparateur à base de papier muni d'un revêtement selon la revendication 1 ou 2, dans lequel l'amidon très réticulé est choisi dans le groupe constitué des amidons de maïs, de blé et de pomme de terre.

4. Séparateur à base de papier muni d'un revêtement selon la revendication 3, dans lequel l'amidon très réticulé est l'amidon de maïs.

5. Séparateur à base de papier muni d'un revêtement selon la revendication 1 ou 2, dans lequel l'amidon très réticulé est l'amidon de maïs choisi parmi ®Vulca 90 et ®Vulca 84.

6. Séparateur à base de papier muni d'un revêtement selon la revendication 1 ou 2, dans lequel l'amidon très réticulé est l'amidon de pomme de terre choisi parmi ®Vector R140 et ®Vector R120.

7. Séparateur à base de papier muni d'un revêtement selon l'une quelconque des revendications précédentes, dans lequel les celluloses éthérifiées sont choisies parmi ®Tylose MH200K, ®Tylose MH50 et ®Culminal MHPC100.

8. Séparateur à base de papier muni d'un revêtement selon l'une quelconque des revendications précédentes, dans lequel une solution aqueuse à 2% poids/volume (P/V) du revêtement à 20°C a une viscosité inférieure à 3000 cP.

9. Séparateur à base de papier muni d'un revêtement selon l'une quelconque des revendications précédentes, dans lequel une solution aqueuse à 2% P/V de la cellulose éthérifiée à 20°C a une viscosité comprise entre environ 20 et 300 cP.

10. Séparateur à base de papier muni d'un revêtement selon l'une quelconque des revendications précédentes, dans lequel une solution aqueuse à 2% P/V de la cellulose éthérifiée à 20°C a une viscosité comprise entre environ 50 et 100 cP.

11. Séparateur à base de papier muni d'un revêtement selon l'une quelconque des revendications précédentes, dans lequel la cellulose éthérifiée est choisi parmi:
Hydroxyéthylcellulose
Hoechst ®Tylose H20
Hoechst ®Tylose H300
Méthylhydroxyéthylcellulose
Hoechst ®Tylose MH50
Hoechst ®Tylose MH200
Hoechst ®Tylose MH200K
Hoechst ®Tylose MH300
Na Carboxyméthylcellulose
Hoechst ®Tylose C30
Hoechst ®Tylose C300
Méthylhydroxypropylcellulose
Aqualon ®Culminal MHPC50
Aqualon ®Culminal MHPC100
Méthylcellulose
Aqualon ®Culminal MC25 S
Aqualon ®Culminal MC40
Aqualon ®Culminal MC60 S

12. Séparateur à base de papier muni d'un revêtement selon l'une quelconque des revendications précédentes, dans lequel le revêtement comprend une combinaison choisie parmi: ®Vulca 90 avec ®Tylose MH200K, et ®Vulca 90 avec ®Tylose MH50.

13. Séparateur à base de papier muni d'un revêtement selon l'une quelconque des revendications précédentes, dans lequel la proportion d'amidon très réticulé par rapport à l'agent gélifiant est d'environ 20:1 à 5:1.

14. Séparateur à base de papier muni d'un revêtement selon la revendication 13, dans lequel la proportion d'amidon très réticulé par rapport à l'agent gélifiant est d'environ 10,5:1.

15. Utilisation d'un amidon très réticulé et d'une cellulose éthérifiée dans la fabrication d'un séparateur à base de papier muni d'un revêtement pour piles électrochimiques, l'amidon très réticulé et la cellulose éthérifiée étant choisis de sorte que, dans des conditions d'entreposage à 45°C en présence d'une solution aqueuse de chlorure de zinc à 25% pendant 13 semaines, l'amidon très réticulé ne présente aucun changement de couleur et peu ou pas du tout de bombement, ainsi que de petits changements dans le temps, et
la cellulose éthérifiée ne présente aucun changement de couleur.

16. Utilisation selon la revendication 15, dans laquelle la solution aqueuse de chlorure de zinc est à une concentration de 46%.

17. Composition pour revêtir un séparateur à base de papier afin de préparer un séparateur à base de papier muni d'un revêtement selon l'une quelconque des revendications 1 à 14, la composition comprenant un mélange de l'amidon très réticulé et de la cellulose éthérifiée, de pair avec un excès de 50% d'eau, l'amidon très réticulé constituant plus de 50% du poids anhydre de la composition.

18. Pile électrochimique comprenant un séparateur selon l'une quelconque des revendications 1 à 14.

19. Pile électrochimique selon la revendication 18, comprenant un adjuvant à base de polyoxyalkylène.
